# EUROPÄISCHE PATENTSCHRIFT

(11) **EP 0 621 736 B1**
(45) Veröffentlichungstag und Bekanntmachung des Hinweises auf die Patenterteilung: **23.08.2000**
(21) Anmeldenummer: 94102377.2
(22) Anmeldetag: 17.02.1994
(51) Int. Cl.: H04Q 11/00, H04Q 11/04

(54) **Anordnung zur leitungsgebundenen digitalen Nachrichtenübertragung**
Arrangement for transmitting digital information by cable
Appareil pour la transmission d'information numérique par câble

(30) Priorität: 23.04.1993 DE 4313340; 03.02.1994 DE 4403319
(43) Veröffentlichungstag der Anmeldung: 26.10.1994
(60) Teilanmeldung: 98120361.5
(73) Patentinhaber: ALCATEL, 75008 Paris (FR)
(72) Erfinder: Still, Michael, D-30851 Langenhagen (DE); Chahabadi, Ziaedin, Dr., D-31848 Bad Münder (DE)
(74) Vertreter: Knecht, Ulrich Karl, Dipl.-Ing.

(56) Entgegenhaltungen:
- EP-A- 0 437 350
- EP-A- 0 481 170
- EP-A- 0 613 315
- US-A- 4 768 188
- Zeitschrift ntz, Band 45, No. 11, (1992), Seite 902, "OPAL Projekt in Stuttgart mit optischen Verstärkern", vom Anmelder zitiert.

## Beschreibung

Die Erfindung bezieht sich auf eine Anordnung zur leitungsgebundenen digitalen Nachrichtenübertragung zwischen einer Vermittlungsstelle eines Fernmeldenetzes und mit derselben verbundenen Teilnehmern, bei welcher zur Durchschaltung einer gegebenenfalls zu verändernden Übertragungsrate zwischen der Vermittlungsstelle und einem betroffenen Teilnehmer in die digitalen Übertragungswege Kanalzuordner eingeschaltet sind, die mittels entsprechender Steuerbefehle von der Vermittlungsstelle aus steuerbar sind (US-A-4 768 188).

Die digitale Übertragungstechnik mit ihren Vorteilen gegenüber der analogen Technik, beispielweise größere Reichweite und hohe Übertragungsraten, setzt sich in der Nachrichtentechnik immer mehr durch. Sie ermöglicht das Angebot unterschiedlichster Dienste, die von den Teilnehmern eines Fernmeldenetzes genutzt werden können. Diese Dienste umfassen heute u. a. Telefon, Telefax, Telex, Teletex, IDN und ISDN (Basis- und Primärmultiplexanschlüsse). Von besonderer Bedeutung ist dabei der Teilnehmeranschlußbereich des Fernmeldenetzes, also das Anschlußleitungsnetz.

Ein derartiges Anschlußleitungsnetz ist unter der Bezeichnung 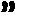 Opal" beispielsweise in der DE-Z 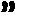 ntz" Bd. 45 (1992), Heft 11, Seiten 902 und 903 für ein Pilotprojekt der DBP Telekom beschrieben. Es sind darin einige ausgewählte Teilnehmer über Glasfasern bzw. Lichtwellenleiter - im folgenden als 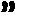 LWL" bezeichnet - mit einer Vermittlungsstelle verbunden. Dabei ist von der Vermittlungsstelle ausgehend ein LWL bis zu einem optischen Verteiler geführt, von dem aus LWL zu Gebäuden und zu einem Kabelabzweiger weitergeführt sind. In diesem passiven Anschlußleitungsnetz wird die Lichtleistung je nach Anzahl der Teilnehmer aufgeteilt, was zu einer Beschränkung der Teilnehmeranzahl führt. Es müssen außerdem angepaßte Laser für Lichtwellenlängen von beispielsweise 1330 nm oder 1550 nm verwendet werden. Hinzu kommt, daß die jeweiligen Geräte der Teilnehmer, das sind beispielsweise Telefone und Datengeräte, analog an sogenannte optische Netzabschlüsse angeschlossen sind, in denen eine digital/analoge Umsetzung erfolgt und in denen die für jeden Teilnehmer vorgesehene Aufteilung der Übertragungsrate geschaltet ist. Die optischen Netzabschlüsse sind für die Teilnehmer nicht zugänglich. Wenn ein Teilnehmer an den bei ihm vorhandenen Geräten Änderungen vornehmen will, beispielweise ein Neuanschluß eines weiteren Geräts, dann muß diese Änderung von Fachpersonal durchgeführt werden, das die Möglichkeit und die Qualifizierung hat, um die notwendigen Schaltarbeiten in den optischen Netzabschlüssen durchführen zu können. Das ist zeitaufwenig und teuer.

Aus der älteren EP-A-0 613 315 geht eine Anordnung zur leitungsgebundenen digitalen Nachrichtenübertragung zwischen einer Vermittlungsstelle eines Fernmeldenetzes und mit derselben verbundenen Teilnehmern hervor, bei welcher an die Vermittlungsstelle mindestens ein mit aktiven elektrischen Komponenten arbeitender Kabelverzweiger über eine Leitung angeschlossen ist. Mit dem Kabelverzweiger sind mindestens zwei mit aktiven elektrischen Komponenten arbeitende Endverzweiger über jeweils eine Leitung verbunden. Von jedem Endverzweiger führt zu mindestens einem Teilnehmer eine elektrische Leitung bis zu einem Übergabepunkt, von dem eine Busleitung ausgeht, an die unterschiedliche Geräte eines Teilnehmers unter Zwischenschaltung von Adaptern parallel zueinander anschließbar sind. Die Adapter liefern für das jeweilige Gerät bestimmte Schnittstellensignale. Jeder Teilnehmer kann unterschiedliche Geräte mit denselben zugeordneter Übertragungsrate bis zur Ausnutzung einer am Übergabepunkt verfügbaren maximalen Übertragungsrate wahlweise und getrennt voneinander anschließen. Zur Durchschaltung der jeweiligen, gegebenenfalls zu verändernden Übertragungsrate zwischen der Vermittlungsstelle und dem betroffenen Teilnehmer sind in die digitalen Übertragungswege Kanalzuordner eingeschaltet, die mittels entsprechender Steuerbefehle von der Vermittlungsstelle aus steuerbar sind.

In der eingangs erwähnten US-A-4 768 188 ist ein Anschlußleitungsnetz beschrieben, bei dem statt Kupferkabeln mindestens eine optische Faser eingesetzt ist. Die optische Faser erlaubt die Übertragung einer so großen Bandbreite, daß nach Installation eines entsprechenden Netzes später keine Ergänzung desselben mehr erforderlich ist. Die optische Faser verläuft zwischen einer Zentrale und mehreren Zugangseinheiten, die sich in der Nähe von vielen Teilnehmern befinden. An die Zugangseinheiten sind die Teilnehmer über geeignete Leitungen angeschlossen. In den Zugangseinheiten sind 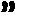 line cards" angeordnet, mit denen jeweils mindestens ein Teilnehmer verbunden ist. Mittels der 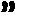 line cards" sind die Teilnehmer mit der Zentrale verbindbar. Die Zugangseinheiten - und damit auch die 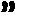 line cards" - sind für die Teilnehmer nicht zugänglich.

Aus der EP-A-0 481 170 geht eine Telefonanlage hervor, in der viele Telefone, insbesondere mit unterschiedlichen Schaltkreisen ausgerüstete Telefone, auf einfache Weise an ein breitbandiges Übertragungsmedium angeschlossen werden können.

Der Erfindung liegt die Aufgabe zugrunde, die eingangs geschilderte Anordnung so zu gestalten, daß die Vorteile der digitalen Nachrichtenübertragung im Teilnehmerbereich besser ausgenutzt werden können.

Diese Aufgabe wird gemäß der Erfindung dadurch gelöst,
- daß der digitale Übertragungsweg für jeden Teilnehmer bis zu einem eigenen, für diesen Teilnehmer zugänglichen Übergabepunkt geführt ist,
- daß zwischen der Vermittlungsstelle und den Übergabepunkten aller Teilnehmer Lichtwellenleiter als Übertragungsmedium eingesetzt sind,
- daß vom Übergabepunkt jedes Teilnehmers eine Busleitung ausgeht, an die unterschiedliche Geräte des Teilnehmers unter Zwischenschaltung von Adaptern parallel zueinander anschließbar sind, welche für das jeweilige Gerät bestimmte Schnittstellensignale liefern,
- daß von jedem Teilnehmer unterschiedliche Geräte mit denselben zugeordneter Übertragungsrate bis zur Ausnutzung einer am Übergabepunkt verfügbaren maximalen Übertragungsrate wahlweise und getrennt voneinander anschließbar sind und
- daß die Kanalzuordner in den Übergabepunkten angeordnet sind.

Mit dieser Anordnung ist jedem Teilnehmer die Möglichkeit gegeben, Geräte bis zur Ausnutzung der maximalen Übertragungsrate von beispielsweise 2,56 Mbit/s selbst an seinem 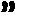 eigenen" Übergabepunkt anzuschließen. Er braucht dazu nur einen jeweils passenden, entsprechende Schnittstellensignale liefernden Adapter zu erwerben, mit dem ein neues oder ein zusätzliches Gerät an den Übergabepunkt angeschlossen werden kann. Die dafür benötigte Übertragungsrate wird von der Vermittlungsstelle aus durchgeschaltet, und zwar mittels entsprechender Steuerbefehle an die Kanalzuordner. Das kann in kürzester Zeit erfolgen. Beispielsweise während der Zeit, die der Teilnehmer braucht, um von dem Ort nach Hause zu kommen, an dem er einen Adapter erworben hat. Fachpersonal, das eine Änderung vor Ort vornehmen muß, wird nicht mehr benötigt.

Der digitale Übertragungsweg ist bei dieser Anordnung für jeden Teilnehmer bis zum Übergabepunkt verlängert, von welchem die Busleitung ausgeht. Die Teilnehmer können also Geräte, die eine digitale Schnittstelle benötigen, mit dem entsprechenden Adapter parallel zueinander an die Busleitung anschließen. Zum Anschluß von analog zu betreibenden Geräten sind entsprechende Adapter mit digital/analog-Umsetzern erforderlich. Diese Umsetzer können auch in den entsprechenden Geräten, beispielsweise in Telefonen, integriert sein.

Die Übertragung der Signale zwischen Vermittlungsstelle und Teilnehmern erfolgt bidirektional. Die maximale Übertragungsrate auf dem an die Vermittlungsstelle angeschlossenen Übertragungsweg liegt beispielsweise bei 34 Mbit/s. Den Teilnehmern sollen beispielsweise 40 Kanäle zu je 64 kbit/s, mindestens jedoch 2,56 Mbit/s, zur Verfügung gestellt werden. Die Kanäle werden den Teilnehmern über die Kanalzuordner zugeordnet. Sie sind nach Installation dieser Anordnung bei den Teilnehmern verfügbar, aber nur im Bedarfsfall durchgeschaltet.

Ein Ausführungsbeispiel des Erfindungsgegenstandes ist in den Zeichnungen dargestellt.

Es zeigen:
Fig. 1 ein schematisches Blockschaltbild einer Anordnung nach der Erfindung.
Fig. 2 eine Einzelheit der Anordnung für einen Teilnehmer

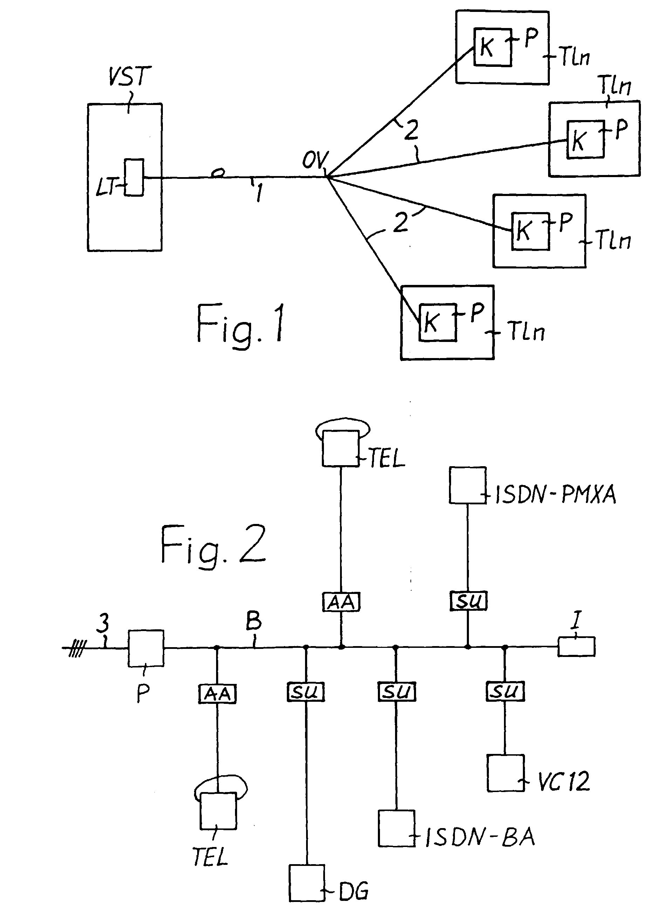

Bei dem in Fig. 1 dargestellten Ausführungsbeispiel ist an eine Vermittlungsstelle VST eines Fernmeldenetzes ein LWL 1 angeschlossen, der in einem optischen Verteiler OV in mehrere LWL aufgeteilt ist. Vom OV können beispielsweise acht LWL weiterführen. Es können aber auch mehr oder weniger als acht LWL sein. In Fig. 1 sind vier weiterführende LWL 2 dargestellt, an deren Enden vier Teilnehmer Tln angeschlossen sind. Der LWL 1 ist in der VST mit einem Leitungsabschluß LT verbunden. Neben anderen Bauteilen ist in dem LT ein elektro/optischer Umsetzer vorhanden. Über den LWL 1 können Signale beispielsweise mit einer maximalen Übertragungsrate von 34 Mbit/s übertragen werden.

Die LWL 2 enden bei den Tln jeweils in einem Übergabepunkt P, an dem jedem Tln eine digitale Schnittstelle zur Verfügung steht, an der er Geräte bis zu einer maximalen Übertragungsrate von beispielsweise 2,56 Mbit/s anschließen kann. Er benötigt dazu für jedes Gerät einen Adapter, welcher als Service-Unit SU für dieses Gerät bestimmte Schnittstellensignale liefert. Für die Durchschaltung und Zuordnung der jeweils benötigten Übertragungsrate sind in den Übergabepunkten P Kanalzuordner K angebracht, die durch entsprechende Signale von der VST aus gesteuert werden.

Die Anordnung nach Fig. 1 arbeitet in Verbindung mit Fig. 2 beispielsweise wie folgt:

Vom Übergabepunkt P eines jeden Tln geht beispielsweise eine mit ihrer Impedanz I abgeschlossene Busleitung B aus, an die Geräte angeschlossen werden können, welche ein Tln betreiben will. Das sind beispielsweise Telefon-Hauptanschlüsse TEL, Datengeräte DG, ISDN-Basisanschluß ISDN-BA, ISDN-Primärmultiplexanschluß ISDN-PMXA und auch Anschlüsse für VC12, so wie es in Fig. 2 angedeutet ist. Die zum Betrieb dieser Geräte benötigten Übertagungsraten bzw. Kanäle stehen am Übergabepunkt P grundsätzlich zur Verfügung. Sie müssen nur im Bedarfsfall durchgeschaltet werden.

In der überwiegenden Anzahl werden die Tln zunächst nur einen Anschluß für ein analoges TEL haben. Das TEL ist mittels eines analogen Adapters AA über den Übergabepunkt P als digitale Schnittstelle an die VST angeschlossen. Der eine Umsetzung analog/digital durchführende Adapter AA kann auch im Gerät des TEL integriert sein. Für diesen Anschluß reicht i. w. ein Kanal mit einer Übertragungsrate von 64 kbit/s aus. Wenn weitere Geräte angeschlossen werden sollen, müssen weitere Kanäle durchgeschaltet werden.

Diese Durchschaltung wird über die Kanalzuordner K durchgeführt. Der dafür erforderliche Steuerbefehl wird von der VST übertragen. Ein Tln kann auf diese Weise so viele Dienste mit entsprechenden Geräten in Anspruch nehmen, wie die am Übergabepunkt P abgreifbare Kanalanzahl bzw. Übertragungsrate es zulassen.

Um das im Bedarfsfall erreichen zu können, braucht der Tln lediglich bei einer dafür vorgesehenen Stelle des Netzbetreibers einen für das jeweilige Gerät geeigneten Adapter mit der spezifischen SU zu erwerben und in seinen Räumen an die Busleitung B anzuschließen. Die Durchschaltung des zusätzlichen Kanals bzw. zusätzlicher Kanäle kann während der Zeit erledigt werden, die der Tln bzw. eine entsprechende Person benötigt, um nach dem Erwerb des Adapters zu seinen Räumlichkeiten zu gelangen.

In dem LT der VST werden Laserdioden als Sender und Empfangsdioden verwendet. Für die LWL 1 und 2 werden Monomodefasern eingesetzt. Die Signale können zwischen der VST und den Übergabepunkten mit der vorgegebenen Übertragungsrate von beispielsweise 34 Mbit/s übertragen werden. Das gilt nicht nur für die bisher im Anschlußleitungsnetz üblichen Entfernungen. Es sind vielmehr ohne den Einsatz von zusätzlichen bzw. speziellen optischen Verstärkern größere Entfernungen zwischen VST und Tln überbrückbar. Die Anzahl der VST eines Netzes kann daher vermindert werden.

Der Vollständigkeit halber wird darauf hingewiesen, daß die angegebenen Übertragungsraten zwischen der VST und den Tln nur eine Größenordnung darstellen. Sie können - je nach Bedarf - auch höher oder niedriger sein. Das gilt grundsätzlich auch für den Tln insgesamt zuführbare Übertragungsrate.

## Patentansprüche

1. Anordnung zur leitungsgebundenen digitalen Nachrichtenübertragung zwischen einer Vermittlungsstelle (VST) eines Fernmeldenetzes und mit derselben verbundenen Teilnehmern (Tln), bei welcher zur Durchschaltung einer gegebenenfalls zu verändernden Übertragungsrate zwischen der Vermittlungsstelle (VST) und einem betroffenen Teilnehmer (Tln) in die digitalen Übertragungswege Kanalzuordner (K) eingeschaltet sind, die mittels entsprechender Steuerbefehle von der Vermittlungsstelle (VST) aus steuerbar sind, **dadurch gekennzeichnet**,
- daß der digitale Übertragungsweg für jeden Teilnehmer (Tln) bis zu einem eigenen, für diesen Teilnehmer zugänglichen Übergabepunkt (P) geführt ist,
- daß zwischen der Vermittlungsstelle (VST) und den Übergabepunkten (P) aller Teilnehmern (Tln) Lichtwellenleiter (LWL) als Übertragungsmedium eingesetzt sind,
- daß vom Übergabepunkt (P) jedes Teilnehmers (Tln) eine Busleitung (B) ausgeht, an die unterschiedliche Geräte des Teilnehmers (Tln) unter Zwischenschaltung von Adaptern (AA,SU) parallel zueinander anschließbar sind, welche für das jeweilige Gerät bestimmte Schnittstellensignale liefern,
- daß von jedem Teilnehmer (Tln) unterschiedliche Geräte mit denselben zugeordneter Übertragungsrate bis zur Ausnutzung einer am Übergabepunkt (P) verfügbaren maximalen Übertragungsrate wahlweise und getrennt voneinander anschließbar sind und
- daß die Kanalzuordner (K) in den Übergabepunkten (P) angeordnet sind.

## Claims

1. Arrangement for the digital transmission of messages by cable between an exchange (EXCH) belonging to a telecommunications network and users (US) connected to the exchange, in which there are channel allocators (CA) inserted in the digital transmission paths to switch through or enable a transmission rate, which rate can be altered if required, between the exchange (EXCH) and a given user (US), which allocators can be controlled from the exchange (EXCH) by means of suitable control commands, **characterised in that**
- the digital transmission path for each user (US) is run to the user's own, dedicated handover point (P) which is accessible to the user concerned,
- optical fibre cables are used as the transmission medium between the exchange (EXCH) and the handover points (P) of all the users (US),
- extending from the handover point (P) of each user (US) is a bus cable (B) to which the different units belonging to a user (US) can be connected, with adapters (AA, SU) inserted, in parallel with one another, which adapters provide interfacing signals intended for the individual units,
- each user (US) can connect in, as desired and separately from one another, different units which use the same allocated transmission rate which may be anything up to the maximum transmission rate available at the handover point (P),
- the channel allocators (CA) are situated at the handover points (P).

## Revendications

1. Système de transmission de télécommunications par lignes numériques entre le central de commutation (VST) d'un réseau de télécommunication et les usagers (Tln) raccordés à ce réseau, système qui pour la mise à disposition d'un taux de transmission réglable, entre un central (VST) et un usager (Tln) concerné, prévoit des répartiteurs de canaux (K) branchés sur les lignes de transmission numériques et commandés à partir du central de commutation (VST) par l'intermédiaires d'instructions de commande appropriées, **système caractérisé par le fait que**
- la ligne de transmission numérique est installée, pour chaque usager (Tln), jusqu'à un point de raccordement (P) accessible à tout usager,
- entre le central de commutation (VST) et le point de raccordement (P) de chaque usager (Tln), la ligne utilisée est un câble à fibre optique (LWL),
- le point de raccordement (P) de chaque usager (Tln) est prolongé par une ligne de bus (B) qui permet à l'usager (Tln) le branchement en parallèle de différents appareils par l'intermédiaire d'adaptateurs (AA, SU) interposés qui délivrent pour chaque appareil des signaux d'interface spécifiques,
- chaque abonné (Tln) pouvant raccorder, au choix et séparément, différents appareils avec le même taux de transmission attribué, et ce jusqu'à épuisement du taux maximum disponible au point de raccordement (P), et
- les répartiteurs de canaux (K) étant disposés dans les points de raccordement (P).
